# EUROPEAN PATENT SPECIFICATION

(11) **EP 2 160 896 B1**
(45) Date of publication and mention of the grant of the patent: **07.08.2019**
(21) Application number: 08766458.7
(22) Date of filing: 19.06.2008
(51) Int. Cl.: H04N 7/12, H04N 21/2362, H04N 19/39, H04N 21/236

(54) **METHOD AND APPARATUS FOR TRANSMITTING DIGITAL BROADCASTING SIGNALS COMPRISING SCALABLE VIDEO CODING (SVC) VIDEO, AND CORRESPONDING RECEIVING METHOD AND APPARATUS**
VERFAHREN UND VORRICHTUNG ZUR ÜBERTRAGUNG DIGITALER FUNKSIGNALE SOWIE VERFAHREN UND VORRICHTUNG FÜR DEN EMPFANG DIGITALER FUNKSIGNALE MIT SCALABLE VIDEO CODING (SVC)-VIDEO UND ENTSPRECHENDE EMPFANGSMETHODE UND VORRICHTUNG
PROCÉDÉ ET APPAREIL DE TRANSMISSION DE SIGNAUX DE RADIODIFFUSION NUMÉRIQUE COMPRENANT DES VIDÉOS À CODAGE SCALABLE VIDEO CODING (SVC), ET PROCÉDÉ ET APPAREIL DE RÉCEPTION CORRESPONDANTS

(30) Priority: 20.06.2007 KR 20070060328; 15.11.2007 KR 20070116459
(43) Date of publication of application: 10.03.2010
(73) Proprietor: Electronics and Telecommunications Research Institute, Yuseong-gu Daejon 305-350 (KR)
(72) Inventor: YUN, Joung il, Daejeon 305-308 (KR); LEE, Gwang Soon, Daejeon 305-770 (KR); KIM, Kwang-Yong, Daejeon 305-751 (KR); KIM, Young Su, Daejeon 301-760 (KR); YANG, Kyu Tae, Daejeon 305-729 (KR); BAE, Jae-Hwui, Daejeon 305-720 (KR); CHOI, Seomee, Daejeon 305-301 (KR); KIM, Ju Yeun, Daegu 700-412 (KR); SEO, Jae Hyun, Daejeon 305-707 (KR); LIM, Jong Soo, Daejeon 301-831 (KR); LEE, Soo In, Daejeon 302-120 (KR)
(74) Representative: Betten & Resch
(86) International application number: PCT/KR2008/003498
(87) International publication number: WO 2008/156325

(56) References cited:
- EP-A2- 1 717 977
- WO-A1-2007/037618
- WO-A1-2008/091102
- KR-A- 20040 065 234
- KR-A- 20070 000 631
- KR-A- 20070 035 409
- US-A1- 2005 055 714
- US-A1- 2006 039 308
- US-A1- 2006 126 634
- US-B1- 6 798 838
- DVB ORGANIZATION: "DVB-H331 [STF Revised] DVB-T PHY En300744.V1.5.2.pdf", DVB, DIGITAL VIDEO BROADCASTING, C/O EBU - 17A ANCIENNE ROUTE - CH-1218 GRAND SACONNEX, GENEVA - SWITZERLAND, 4 September 2006 (2006-09-04), XP017809221,
- SCHERTZ AND C WECK A: "Hierarchical modulation ? the transmission of two independent DVB-T multiplexes on a single frequency", E B U TECHNICAL RE, EUROPEAN BROADCASTING UNION, CH, 1 April 2003 (2003-04-01), pages 1-13, XP007917844, ISSN: 1019-6587

## Description

### Technical Field

The present invention relates to a method and apparatus for transmitting digital broadcasting signals, and a method and apparatus for receiving digital broadcasting signals. Particularly, the present invention relates to a method and apparatus for transmitting digital broadcasting signals and a method and apparatus for receiving digital broadcasting signals that are capable of providing a high-quality service that requires high transmission efficiency, assuring backward-compatibility with the existing terrestrial DMB signal. The high transmission efficiency means a higher data transfer rate than that of the existing DMB system.

The present invention was supported by the IT R&D program of MIC/IITA [2006-S-017-02, Development of advanced transmission technology for the terrestrial DMB system].

### Background Art

A terrestrial DMB (digital multimedia broadcasting) system is constructed by adding a standard for providing a video service to a Eureka-147 DAB system, and provides various multimedia broadcasting services.

In a general terrestrial DMB system, the configuration and length of a transmission frame depend on a transmission mode. The Eureka-147 DAB system defines transmission mode (I) for terrestrial broadcasting over a single frequency network, transmission mode (II) for terrestrial broadcasting over a multiplex frequency network, transmission mode (III) for cable broadcasting, and transmission mode (IV) for a combination of terrestrial broadcasting and satellite broadcasting. The general terrestrial DMB system uses the transmission mode (I) among the transmission modes of the Eureka-147 DAB system.

In the terrestrial DMB system using the transmission mode (I), when convolution coding at a rate of 1/2 is applied, an available transfer rate is 1.152 Mbps. When two video services are multiplexed to one ensemble, a transfer rate of 576 Mbps is allocated to each video service.

Therefore, the existing terrestrial DMB system can provide a moving picture composed of 30 frames each having a CIF (common intermediate format, 352^{∗}288 pixels) resolution, which is a maximum resolution. However, the CIF resolution is insufficient to provide a proper service on a screen of 7 inches or more.

The above information disclosed in this Background section is only for enhancement of understanding of the background of the invention and therefore it may contain information that does not form the prior art that is already known in this country to a person of ordinary skill in the art.

The document WO 2008/091102 A1 describes a hierarchical modulation apparatus capable of improving transmission performance of an OFDM transmission system through pilot insertion and a pilot array structure. In the OFDM transmission system having a base layer channel encoder, an enhancement layer channel encoder, and hierarchical modulator, the hierarchical modulation apparatus includes: a pilot insertion unit inserting pilots into an encoded enhancement layer signal sequence output from the enhancement layer encoder, the pilots having a correlation with a base layer signal sequence corresponding to the same sub-carriers as those of the encoded enhancement layer signal sequence; and a pilot size controller controlling sizes of the pilots received from the hierarchical modulator. Accordingly, by applying the hierarchical modulation to an existing DMB system, it is possible to minimize influence of channels to an existing service and increase a data transmission rate.

Further, the document EP 1 717 977 A2 describes a method and apparatus for supporting a priority transmission of broadcasting data in a transmitter of a digital broadcasting system. A determination is made as to whether a priority transmission of one broadcasting service to be provided is supported. If the service supports the priority transmission, a plurality of subchannels to be transmitted for the service are set and a priority of the data to be mapped to the plurality of subchannels is set. The data of the broadcasting service is mapped to the plurality of subchannels according to the priority. Data streams mapped to the plurality of subchannels are encoded in different encoders and the encoded data streams are transmitted.

The document: "DVB ORGANIZATION: "DVB-H331 [STF Revised] DVB-T PHY En300744. V 1.5.2. pdf", DVB, DIGITAL VIDEO BROADCASTING, C/O EBU - 17A ANCIENNE ROUTE - CH-1218 GRAND SACONNEX, GENEVA - SWITZERLAND, 4 September 2006 (2006-09-04), XP017809221;
relates to the digital video broadcasting (DVB) standard.

Finally, the document: "SCHERTZ AND C WECK A: "Hierarchical modulation - The transmission of two independent DVB-T multiplexes on a single frequency", E B U TECHNICAL RE, EUROPEAN BROADCASTING UNION, CH, 1 April 2003 (2003-04-01), pages 1-13, XP007917844, ISSN: 1019-6587
relates to hierarchical modulation and the transmission of two independent DVB-T multiplexes on a single frequency.

### Disclosure of Invention

### Technical Problem

The invention is defined in the independent claims.

The present invention has been made in an effort to provide a method and apparatus for transmitting digital broadcasting signals and a method and apparatus for receiving digital broadcasting signals that is capable of providing a high-quality service that requires high transmission efficiency while being compatible with the existing terrestrial DMB signal. The high transmission efficiency means a higher data transfer rate than that of the existing digital broadcasting system.

### Technical Solution

According to a first aspect, a method of transmitting broadcasting signals includes: generating a base frame that includes a base service stream for restoring a service with a base quality; generating an enhancement frame that includes an enhancement service stream for restoring a service with an enhancement quality that is higher than the base quality, in addition to the base service stream; and modulating the base frame and the enhancement frame into base and enhancement layers, respectively. The base frame includes a hierarchical modulation index required to receive the enhancement frame.

The generating of the base frame may include configuring the hierarchical modulation index in a type 0 field of a fast information group of type 0 that has one of extension fields with use that is not designated, in a fast information channel of the base frame.

The method according to the first aspect may further include dividing the service with the enhancement quality into the base service stream and the enhancement service stream.

In the generating of the base frame, the base frame may include a base service field having information on the base service stream therein. In the generating of the enhancement frame, the enhancement frame may include an enhancement service field having information on the enhancement service stream therein. The base service field may include a base service identification field having an identifier of the service with the base quality therein, and the enhancement service field may include an enhancement service identification field having an identifier of the service with the base quality therein. The base service field may further include a data service component type field having a value indicating the service with the base quality therein, and the enhancement service field may further include a data service component type field having a value indicating additional data of the service with the enhancement quality therein. The base service field may further include a first priority flag having a value indicating primary therein, and the enhancement service field may further include a second priority flag having a value indicating secondary that is lower than the first priority therein.

In the generating of the base frame, the base service field may include a user application information field having information on decoding the base service stream therein. In the generating of the enhancement frame, the enhancement service field may include a user application information field having information on decoding the enhancement service stream therein. The user application information field in the base frame may include a base service identification field having an identifier of the service with the base quality, and the user application information field in the enhancement frame may include an enhancement service identification field having an identifier of the service with the enhancement quality. The user application information field in the base frame may further include a user application data field having a value indicating the profile of the service with the base quality therein, and the user application information field in the enhancement frame may further include a user application data field having a value indicating the profile of the additional data of the service with the enhancement quality therein.

According to a second aspect, an apparatus for transmitting broadcasting signals includes: a service encoder that outputs a base service stream for restoring a service with a base quality and a enhancement service stream for restoring a service with a enhancement quality in addition to the base service stream; a first ensemble processing unit that generates the base frame including a base service stream; a second ensemble processing unit that generates the enhancement frame including an enhancement service stream; and a hierarchical modulation unit that modulates the base frame and the enhancement frame into base and enhancement layers, respectively. The base frame includes a field indicating a hierarchical modulation index that is required to receive the enhancement frame. A fast information group of type 0 having one of extension fields with use that is not designated may include a field indicating the hierarchical modulation index.

The base frame may include a base service field having information on the base service stream therein, and the enhancement frame may include an enhancement service field having information on the enhancement service stream therein. The base service field may include a base service identification field having an identifier of the service with the base quality therein, a data service component type field having a value indicating the service with the base quality therein, and a first priority flag having a value indicating primary. The enhancement service field may include an enhancement service identification field having an identifier of the service with the second quality therein, a data service component type field having a value indicating additional data of the service with the enhancement quality therein, and a second priority flag having a value indicating secondary that is lower than the first priority therein.

The base frame may include a user application information field having information on decoding the base service stream therein, and the enhancement frame may include a user application information field having information on decoding the the enhancement service stream therein. The user application information field in the base frame may include a base service identification field having an identifier of the service with the base quality therein, and a user application data field having a value indicating the profile of the service with the base quality therein. The user application information field in the enhancement frame may include an enhancement service identification field having an identifier of the service with the enhancement quality therein, and a user application data field having a value indicating the profile of additional data of the service with the enhancement quality therein.

According to a third aspect, a method of receiving broadcasting signals includes: receiving the base frame modulated to the base layer; detecting a hierarchical modulation index from the base frame; receiving the enhancement frame modulated to the enhancement layer using the hierarchical modulation index; extracting a base service stream from the base frame; extracting, from the enhancement frame, a enhancement service stream including a service identification field having the same value as that in a service identification field for the base service stream; and decoding a combination of the base service stream and the enhancement service stream to provide a service with a enhancement quality that is higher than the base quality.

The method according to the third aspect may further include, when the hierarchical modulation index is not detected from the base frame, decoding the base service stream to provide a service with a base quality that is lower than the enhancement quality.

The service component type field for the base service stream may be a value indicating the service with the base quality, and the service component type field for the enhancement service stream may be a value indicating additional data of the service with the enhancement quality, in addition to the base service stream.

The user application data field for the base service stream may be a value indicating the service with the base quality, and the user application data field for the enhancement service stream may be a value indicating additional data of the service with the enhancement quality, in addition to the base service stream.

According to a fourth aspect of the invention, an apparatus for receiving broadcasting signals includes: a signal receiving unit that selectively receives broadcasting signals modulated to the base or the enhancement layer from the outside; a first signal recognizing unit that extracts the base frame from the broadcasting signal of the base layer received by the signal receiving unit; a first frame analyzing unit that detects a hierarchical modulation index from the base frame; a second signal recognizing unit that uses the hierarchical modulation index to extract the enhancement frame from the broadcasting signal of the enhancement layer received by the signal receiving unit; a first stream extractor that extracts a base service stream with a base quality from the base frame; a second stream extractor that extracts, from the enhancement frame, a enhancement service stream including a service identification field having the same value as that in a service identification field for the base service stream; a first service decoder that decodes the base service stream to provide a service with the base quality; and a second service decoder that decodes a combination of the base service stream and the enhancement service stream to provide a service with a enhancement quality that is higher than the base quality.

A service component type field for the base service stream may be a value indicating the service with the base quality, and a service component type field for the enhancement service stream may be a value indicating additional data of the service with the enhancement quality.

A user application data field for the base service stream may be a value indicating the service with the base quality, and a user application data field for the enhancement service stream may be a value indicating additional data of the service with the enhancement quality.

### Advantageous Effects

According to the aspects of the present invention, it is possible to provide a high-quality service with a higher data transfer rate than the existing digital broadcasting system while being compatible with the existing digital broadcasting signals. Therefore, it is possible to provide various services, as compared to the existing digital broadcasting system.

### Brief Description of the Drawings

FIG. 1 is a diagram illustrating the configuration of a transmission frame of an ensemble of a terrestrial DMB system according to an exemplary embodiment of the present invention.
FIG. 2 is a diagram illustrating the configuration of a fast information block of the transmission frame shown in FIG. 1 according to the exemplary embodiment of the present invention.
FIG. 3 is a diagram illustrating the configuration of a fast information block of type 0 according to an exemplary embodiment of the present invention.
FIG. 4 is a diagram illustrating the configuration of an apparatus for transmitting terrestrial DMB signals according to an exemplary embodiment of the present invention.
FIG. 5 is a flowchart illustrating a method of transmitting terrestrial DMB signals according to an exemplary embodiment of the present invention.
FIG. 6 is a diagram illustrating an example of the constellation of signals by hierarchical modulation according to an exemplary embodiment of the present invention.
FIG. 7 is a diagram illustrating an example of the hierarchical modulation information FIG including a hierarchical modulation field according to an exemplary embodiment of the present invention.
FIG. 8 is a diagram illustrating a portion of a fast information block indicating a base layer video service according to a first exemplary embodiment of the present invention.
FIG. 9 is a diagram illustrating a portion of a fast information block indicating an enhancement layer video service according to the first exemplary embodiment of the present invention.
FIG. 10 is a diagram illustrating a portion of a fast information block indicating a base layer video service according to a second exemplary embodiment of the present invention.
FIG. 11 is a diagram illustrating a portion of a fast information block indicating an enhancement layer video service according to a second exemplary embodiment of the present invention.
FIG. 12 is a diagram illustrating the configuration of an apparatus for receiving broadcasting signals according to an exemplary embodiment of the present invention.
FIG. 13 is a flowchart illustrating a method of receiving broadcasting signals according to an exemplary embodiment of the present invention.

### Mode for the Invention

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

It will be understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. In addition, the terms "-er", "-or", and "module" described in the specification mean units for processing at least one function and operation, and can be implemented by hardware components or software components, and combinations thereof.

Hereinafter, a method and apparatus for transmitting digital broadcasting signals and a method and apparatus for receiving digital broadcasting signals according to exemplary embodiments of the present invention will be described.

First, a digital broadcasting signal transmitting apparatus according to an exemplary embodiment of the present invention transmits a transmission frame having the same structure as the existing terrestrial DMB (terrestrial digital multimedia broadcasting) transmission frame to be compatible with the existing terrestrial DMB signals.

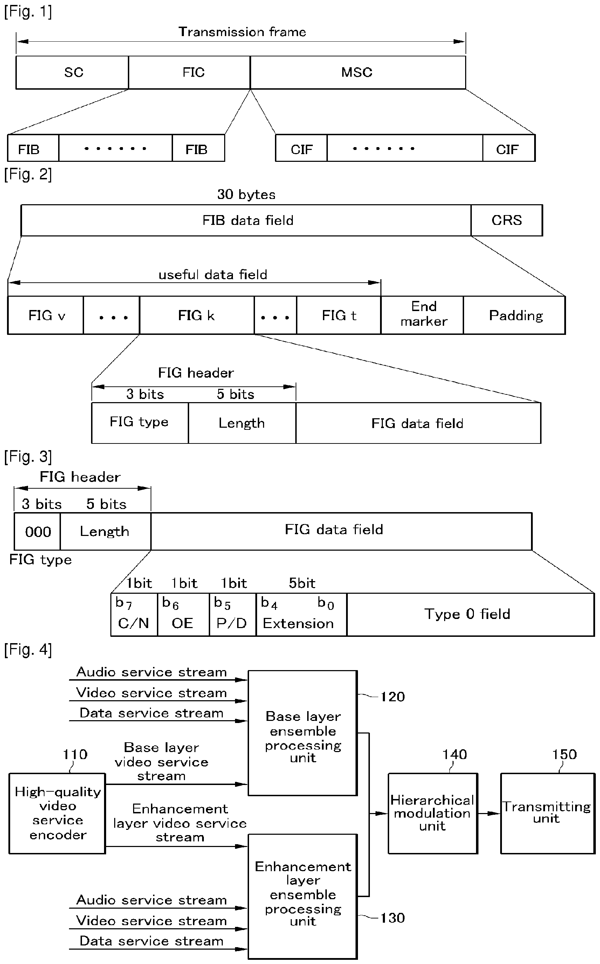

FIG. 1 is a diagram illustrating the configuration of a transmission frame of an ensemble in the terrestrial DMB system according to the exemplary embodiment of the present invention.

As shown in FIG. 1, the transmission frame of an ensemble in the terrestrial DMB system according to the exemplary embodiment of the present invention (hereinafter, referred to as a "transmission frame") includes a synchronization channel (which is shown as "SC" in FIG. 1), a fast information channel (which is shown as "FIC" in FIG. 1), and a main service channel (which is shown as "MSC" in FIG. 1).

The synchronization channel (SC) transmits information for decoding digital signals, and has a predetermined form in order to represent the synchronization of the transmission frame.

The fast information channel (FIC) transmits channel information and information on actual data that is configured in the main service channel (MSC), and includes one or more fast information blocks (which is shown as "FIB" in FIG. 1).

The main service channel (MSC) transmits actual data, such as audio service data, data service data, or video service data, and includes one or more common interleaved frames (which is shown as "CIF" in FIG. 1).

The exemplary embodiment of the present invention relates to the fast information channel (FIC) that transmits information for analyzing actual data of the main service channel (MSC). Therefore, in the following description, a detailed description of the synchronization channel (SC) and the main service channel (MSC) will be omitted.

FIG. 2 is a diagram illustrating the configuration of a fast information block of the transmission frame shown in FIG. 1 according to the exemplary embodiment of the present invention.

As shown in FIG. 2, the fast information block (FIB) includes a 30-byte data field (which is shown as "FIG data field" in FIG. 2 and is hereinafter referred to as a "FIB data field") and a 2-byte cyclic redundancy check (CRC) field.

The FIB data field includes a plurality of fast information groups (which are shown as "FIGs" in FIG. 2 and hereinafter referred to as "FIGs"), an end marker (which is shown as "End marker" in FIG. 2) field, and a padding (which is shown as "padding" in FIG. 2) field. The FIG indicates a package of information, the end marker field includes end information of the FIG, and the padding field is a reserved field for a fixed length (30 bytes) of the FIB data field.

As shown in FIG. 2, the FIG includes a header (which is shown as "FIG header" in FIG. 2 and hereinafter referred to as "FIG header") and a data field (which is shown as "FIG data field" in FIG. 2 and hereinafter referred to as "FIG data field"). The length of the FIG is variable, but does not exceed 30 bytes including the FIG header. One FIG cannot be divided into two or more FIBs for transmission.

The FIG header includes an FIG type field (which is shown as "FIG type" in FIG. 2) and a length field (which is shown as "Length" in FIG. 2). The FIG type field uses 3 bits to transmit type information for indicating characteristics of information transmitted by the FIG data field, and the length field uses 5 bits to indicate the length of the FIG data field.

The FIG data field includes actual data to be transmitted through the FIG. Table 1 shows an example of information that is configured in the FIG type field according to the kind of information included in the FIG data field.

### Table 1

**[Table 1]**

| FIG type field | | FIG information |
|---|---|---|
| bin | dec | |
| 000 | 0 | MCI and part of the SI |
| 001 | 1 | Labels, etc. (part of the SI) |
| 010 | 2 | Reserved |
| 011 | 3 | Reserved |
| 100 | 4 | Reserved |
| 101 | 5 | FIC Data Channel (FIDC) |
| 110 | 6 | Conditional Access (CA) |
| 111 | 7 | In House (except for Length 31) |

As shown in Table 1, an FIG of type 0 transmits multiplexing configuration information (MCI) and part of the service information (SI), and an FIG of type 1 transmits SI including a label for display and other information for defining the label. An FIG of type 5 transmits a fast information data channel (FIDC), and an FIG of type 6 transmits information (conditional access (AC)) for controlling and managing components of an emergency service. An FIG of type 7 is used to expand the length field when the length of the FIG data field exceeds 31. An FIG of type 2, an FIG of type 3, and an FIG of type 4 are reserved FIGs that are not currently used, and can be newly defined, if necessary.

The exemplary embodiment of the present invention relates to the FIG of type 0, and thus only the FIG of type 0 will be described below.

FIG. 3 is a diagram illustrating the configuration of the fast information block of type 0 according to the exemplary embodiment of the present invention.

As shown in FIG. 3, in the FIG of type 0, the FIG data field include a C/N (current/next) flag, an OE (other ensemble) flag, a P/D (programme/data) flag, an extension field (which is shown as "Extension" in FIG. 3), and a type 0 field (which is shown as "type 0 field" in FIG. 3) that is formed of actual information transmitted to the FIG of type 0.

The C/N flag discriminates whether information in the type 0 field is current information or future information.

The OE (other ensemble) flag discriminates whether the information in the type 0 field is related to a corresponding ensemble or another ensemble.

The P/D (programme/data) flag designates the length of a service identification field transmitting a service identifier (hereinafter, referred to as "SId") that is included in the type 0 field and corresponding to information of the type 0 field to 16 bits or 32 bits. In general, a 16-bit service identification field transmits the SId of a program service, and a 32-bit service identification field transmits the Sid of a data service.

The extension field (Extension) indicates the kind of information of the type 0 field. For example, in an extension field of 0 (hereinafter, referred to as "FIG 0/0"), the type 0 field transmits service information (SI) and ensemble information including a common control mechanism that is applied to all the services included in an ensemble. In an extension field of 1 (hereinafter, referred to as "FIG 0/1"), the type 0 field transmits the multiplexing configuration information (MCI). In an extension field of 2 (hereinafter, referred to as "FIG 0/2"), the type 0 field transmits basic service configuration information. As such, information included in the type 0 field is defined by the extension field (Extension).

Next, an apparatus and method for transmitting broadcasting signals according to an exemplary embodiment of the present invention will be described.

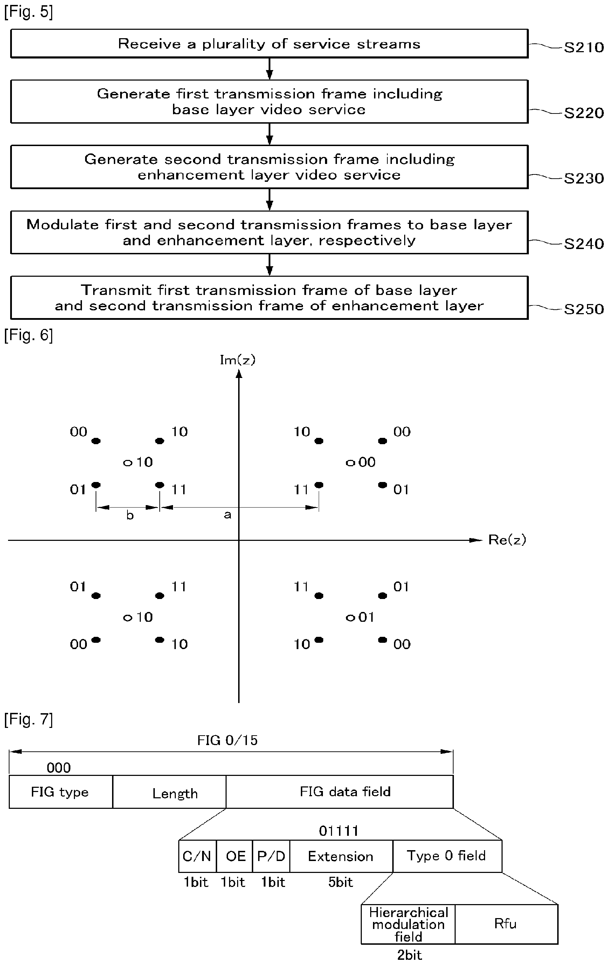

FIG. 4 is a diagram illustrating the structure of a terrestrial DMB signal transmitting apparatus according to an exemplary embodiment of the present invention, and FIG. 5 is a flowchart illustrating a method of transmitting terrestrial DMB signals according to an exemplary embodiment of the present invention.

As shown in FIG. 4, the terrestrial DMB signal transmitting apparatus according to the exemplary embodiment of the present invention includes a plurality of service encoders (not shown) that provide a plurality of services, a high-quality video service encoder 110 that provides a high-quality video service, a base layer ensemble processing unit 120, an enhancement layer ensemble processing unit 130, a hierarchical modulation unit 140, and a transmitting unit 150.

The plurality of service encoders (not shown) transmit different service streams (for example, an audio service stream, a video service stream, and a data service stream) to the base layer ensemble processing unit 120 and the enhancement layer ensemble processing unit 130. In this case, the plurality of service encoders are operated by corresponding service providers.

The high-quality video service encoder 110 provides a high-quality video service that is implemented by images having a CIF (common intermediate format, 352^{∗}288 pixels) resolution or more. That is, the high-quality video service encoder 110 outputs a base layer video service stream and an enhancement layer video service stream. For example, the high-quality video service encoder 110 can divide a high-quality video service into the base layer video service stream and the enhancement layer video service stream using a technique for encoding one video into a plurality of bit streams, such as SVC (scalable video coding).

The base layer video service stream may be decoded to obtain image quality provided by the existing terrestrial DMB system. The enhancement layer video service stream is composed of data that should be additionally included in the base layer video service stream in order to decode a high-quality video service. That is, a high-quality video service is not decoded into a predetermined format by only the enhancement layer video service stream, but it can be decoded into a predetermined format by a combination of the base layer video service stream and the enhancement layer video service stream.

As shown in FIG. 4, the base layer ensemble processing unit 120 and the enhancement layer ensemble processing unit 130 receive a plurality of service streams transmitted from a plurality of service encoders (not shown) (S210). The base layer ensemble processing unit 120 receives a base layer video service stream from the high quality video service encoder 110, and the enhancement layer ensemble processing unit 130 receives an enhancement layer video service stream from the high quality video service encoder 110.

The base layer ensemble processing unit 120 multiplexes at least one service stream including the base layer video service stream to generate an ensemble, and generates a first transmission frame for the generated ensemble (S220).

The enhancement layer ensemble processing unit 130 multiplexes at least one service stream including the enhancement layer video service stream to generate an ensemble, and generates a second transmission frame for the generated ensemble (S230).

The hierarchical modulation unit 140 modulates the first transmission frame output from the base layer ensemble processing unit 120 into a base layer, and the second transmission frame output from the enhancement layer ensemble processing unit 130 into an enhancement layer above the base layer (S240).

The transmitting unit 150 transmits the first and second transmission frames that are respectively modulated into the base layer and the enhancement layer by the hierarchical modulation unit 140 at the same frequency (S250).

As described above, the broadcasting signal transmitting apparatus according to the exemplary embodiment of the present invention encodes a high-quality service into a base layer service stream and an enhancement layer service stream, and modulates a transmission frame including the base layer service stream into a base layer and a transmission frame including the enhancement layer service stream into an enhancement layer. The transmission frame including the base layer service stream and the transmission frame including the enhancement layer service stream are generated in the same structure as that of the transmission frame in the existing terrestrial DMB system. Therefore, they can be compatible with the existing terrestrial DMB system. Since the enhancement layer service stream is encoded into additional data that is not included in the base layer service stream, a receiving apparatus can provide a high-quality service using a combination of the enhancement layer service stream and the base layer service stream.

Meanwhile, a transmitting apparatus inserts information required to receive an enhancement layer signal (hereinafter, referred to as a "hierarchical modulation index") into a transmission frame that is modulated into a base layer (hereinafter, referred to as a "base layer signal") such that the receiving apparatus can receive the transmission frame that is modulated into an enhancement layer (hereinafter, referred to as an "enhancement layer signal"). The hierarchical modulation index is a value used to discriminate the enhancement layer signal from the base layer signal.

FIG. 6 is a diagram illustrating an example of a signal constellation according to a hierarchical modulation method according to an exemplary embodiment of the present invention. In FIG. 6, a symbol ○ indicates a base layer signal, and a symbol ● indicates an enhancement layer signal.

As shown in FIG. 6, the modulation level of the enhancement layer signal is determined on the basis of the modulation level of the base layer signal. The distance between enhancement layer signals 11 in quadrants adjacent to each other in the horizontal or vertical direction is represented by "a", and the distance between the enhancement layer signals in the same quadrant is represented by "b". The hierarchical modulation index is a/b, which may be a value of, for example, 2.0, 2.5, 3.0, or 3.5.

Meanwhile, according to this exemplary embodiment of the present invention, the hierarchical modulation index is transmitted through an FIC that does not form time interleaving. In this way, after receiving a transmission frame, the receiving apparatus can rapidly analyze the hierarchical modulation index. Particularly, since the hierarchical modulation index can be classified into information required for reception, a hierarchical modulation field that indicates the hierarchical modulation index may be included in the FIG of type 0 including an arbitrary extension field. An extension field with use that has not been specified may be designated in order to indicate the FIG of type 0 including the hierarchical modulation field.

FIG. 7 is a diagram illustrating an example of the fast information block of type 0 including the hierarchical modulation field according to an exemplary embodiment of the present invention. FIG. 7 shows an example of the fast information block of type 0 having an extension field of 15 including the hierarchical modulation field (hereinafter, referred to as "Hierarchical Modulation Information FIG 0/15").

As shown in FIG. 7, the hierarchical modulation field is configured in a portion of the type 0 field of the FIG 0/15. That is, in the type 0 field of the FIG 0/15, 2 bits indicating the hierarchical modulation index is set in the hierarchical modulation field, and the other bits that are not allocated by hierarchical modulation may be set in a reserved field (Rfu) for future use.

In FIG. 7, the hierarchical modulation field is configured in the type 0 field of the FIG 0/15. According to the exemplary embodiment of the present invention, a non-specified extension field is arbitrarily designated, and the FIG of type 0 having the designated extension field may include the hierarchical modulation field in the type 0 field.

As described above, according to this exemplary embodiment of the present invention, the transmitting apparatus inserts, into the base layer signal, the hierarchical modulation index, which is information required to receive the enhancement layer signal. In this way, the receiving apparatus can recognize the hierarchical modulation index from the received base layer signal, and receive the enhancement layer signal using the hierarchical modulation index.

Meanwhile, the high-quality video service encoder encodes a high-quality video service into a base layer video service stream and an enhancement layer video service stream.

The base layer video service stream is identical with the video service stream that is transmitted/received by the existing terrestrial DMB system, and can be discriminated by the same method as that in the existing terrestrial DMB system. In contrast, a method of discriminating the enhancement layer video service stream has not yet been proposed.

Next, a method of discriminating the enhancement layer video service stream according to an exemplary embodiment of the present invention will be described.

According to a first exemplary embodiment of the present invention, the enhancement layer video service stream is discriminated by a data service component type (DSCTy) of FIG 0/2 that transmits information on a service and service components.

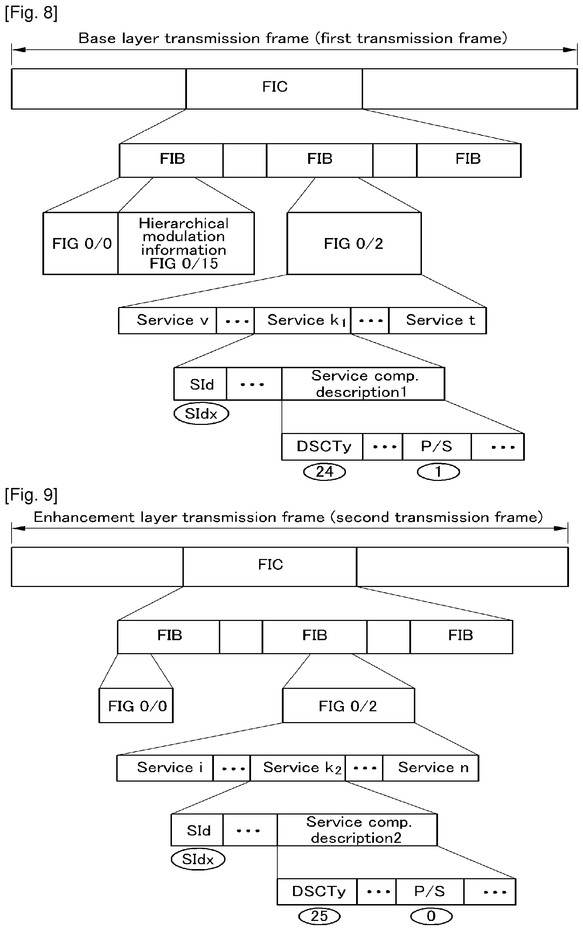

FIG. 8 is a diagram illustrating a portion of a fast information block that indicates a base layer video service according to the first exemplary embodiment of the present invention, and FIG. 9 is a diagram illustrating a portion of a fast information block that indicates an enhancement layer video service according to the first exemplary embodiment of the present invention.

As shown in FIG. 8, a base layer transmission frame (which is shown as a "first transmission frame" in FIG. 8 and is hereinafter referred to as a "first transmission frame") including a base layer video service stream (hereinafter, referred to as a "first stream") includes a hierarchical modulation field that transmits the hierarchical modulation index.

In general, FIG 0/2 includes a plurality of service fields (for example, "Service v", "Service k₁", and "Service t" in FIG. 8) that transmit a plurality of services of the main service channel (MSC).

In FIG. 8, it is assumed that the service field (Service k₁) defines the first stream.

The service field (Service k₁) includes a service identification field (which is shown as "SId" in FIG. 8) and a service component description field (which is shown as "Service comp. description 1" in FIG. 8). The service identification field (SId) transmits an arbitrary high-quality video service identifier (which is shown as "SIdx" in FIG. 8), and the service component description field (Service comp. description 1) transmits information on a subchannel through which the first stream is transmitted, or the kind of service that is obtained by decoding the first stream.

Particularly, in the service component description field (Service comp. description 1), the data service component type field (which is shown as "DSCTy" in FIG. 8) indicates that the first stream is decoded from the video service. According to the existing terrestrial DMB system, a data service component type for the video service is defined as 24.

In the service component description field (Service comp. description 1), a priority flag (which is shown as "P/S" in FIG. 8) transmitting the order of decoding the first stream transmits a value indicating high priority. According to the existing terrestrial DMB system, a priority flag (P/S, primary/secondary) composed of 1 indicates primary, and a priority flag (P/S) composed of 0 indicates secondary. That is, as shown in FIG. 8, according to the first exemplary embodiment of the present invention, the priority flag (P/S) of the service component description field (Service comp. description 1) transmits 1.

Meanwhile, FIG. 9 is a diagram illustrating some FIGs of an enhancement layer transmission frame (which is shown as a "second transmission frame" in FIG. 9 and hereinafter referred to as a "second transmission frame") including an enhancement layer video service stream (hereinafter, referred to as a "second stream"). As shown in FIG. 9, it is assumed that a service field (Service k₂) defines the second stream.

In the service field (Service k₂), a service identification field (which is shown as "SId" in FIG. 9) transmits an identifier (SIdx). That is, the service identification field of the service field (Service k₂) transmits the same SIdx as that of the service identification field of the service field (Service k₁) such that the receiving apparatus can recognize that the second stream of the second transmission frame is related to the first stream of the first transmission frame.

In a service component description field (which is shown as "Service comp. description 2" in FIG. 9) of the service field (Service k₂), a value transmitted to the service component type field (which is shown as "DSCTy" in FIG. 9) indicates that the second stream is additional data that is decoded to a high-quality video service.

According to the first exemplary embodiment of the present invention, it is necessary to separately define a data component type field of the additional data. For example, as shown in FIG. 9, the data service component type (DSCTy) indicating the enhancement layer video service stream can be defined as 25 which has not been used.

In the service component description field (Service comp. description 2), a priority flag (which is shown as "P/S" in FIG. 9) transmits a value indicating secondary. As in the existing terrestrial DMB system, the priority flag (P/S) of the service component description field (Service comp. description 2) may transmit a value of 0 indicating secondary.

As described above, according to the first exemplary embodiment of the present invention, a data service component type for discriminating the enhancement layer video service stream is defined. In this way, it is possible to discriminate the enhancement layer video service stream and the base layer video service stream, on the basis of information transmitted through the data constituent elements type field (DSCTy) and information transmitted through the priority flag (P/S). In addition, the same service identifier is transmitted to the service identification fields of the base layer video service stream and the enhancement layer video service stream that is decoded to one video service. Therefore, it is possible to indicate that two video service streams correspond to an arbitrary high-quality video service.

Next, a method of discriminating an enhancement layer video service stream according to a second exemplary embodiment of the present invention will be described.

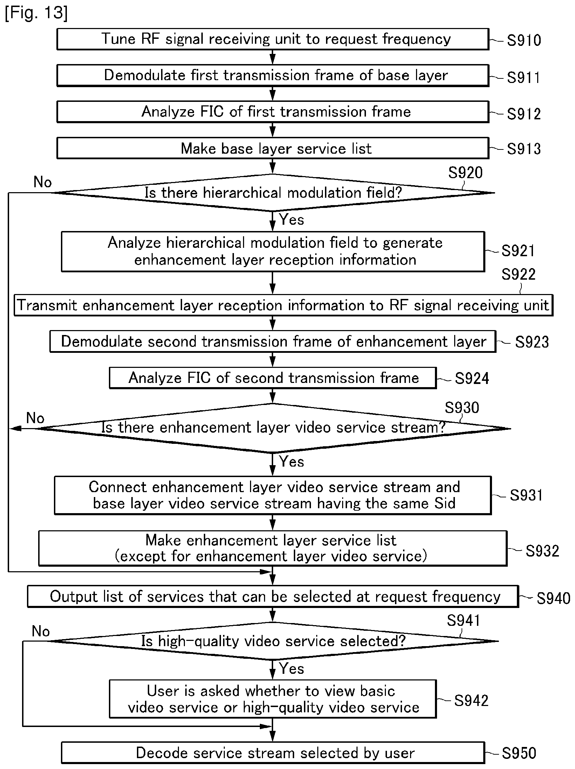

According the second exemplary embodiment of the present invention, an enhancement layer video service stream is discriminated by user application data indicating the enhancement layer video service stream in an FIG of type 0 having an extension field of 13 (hereinafter, referred to as "FIG 0/13") that transmits service user application information. The user application information is used to perform signaling such that application services can be exactly matched with corresponding decoders.

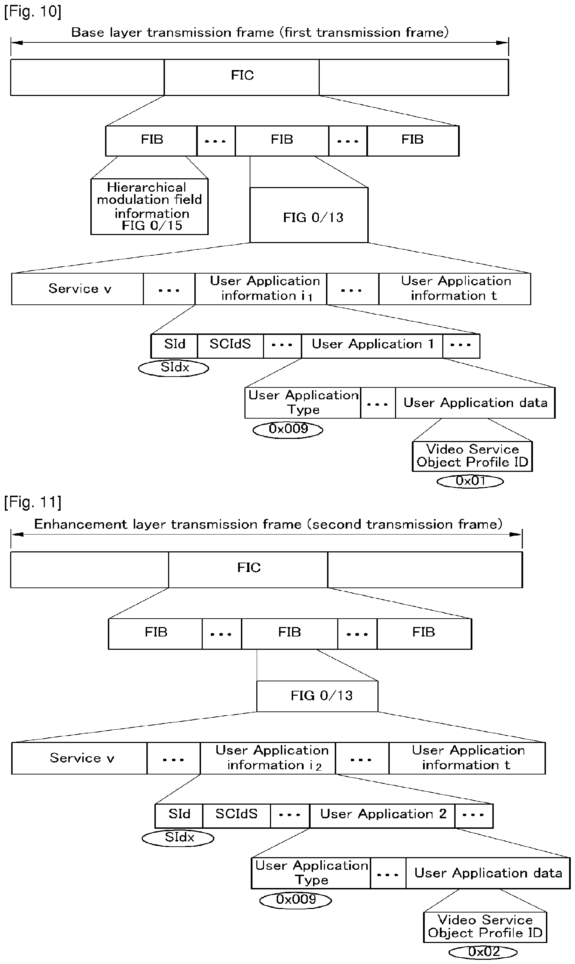

FIG. 10 is a diagram illustrating a portion of a fast information block indicating a base layer video service according to the second exemplary embodiment of the present invention, and FIG. 11 is a diagram illustrating a portion of a fast information block indicating an enhancement layer video service according to the second exemplary embodiment of the present invention.

As shown in FIG. 10, a base layer transmission frame (which is shown as a "first transmission frame" in FIG. 10 and is hereinafter referred to as a "first transmission frame") including a base layer video service stream (hereinafter, referred to as a "first stream") includes a hierarchical modulation field that transmits a hierarchical modulation index.

In general, FIG 0/13 includes at least one service field (which is shown as "Service v" in FIG. 10) and a plurality of user application information fields (which are shown as "User Application information i₁" and "User Application information t" in FIG. 10).

In FIG. 10, it is assumed that a user application information field (User Application information i₁) defines the first stream.

The user application information field (User Application information i₁) includes a service identification field (which is shown as "SId" in FIG. 10), a service component Identifier within the service (which is shown as "SCIdS" in FIG. 10 and is hereinafter referred to as "SCIdS"), and a user application field (which is shown as "User Application 1" in FIG. 10). In the user application information field (User Application information i₁), the service identification field (SId) transmits an identifier (which is shown as "SIdx" in FIG. 10) indicating an arbitrary high-quality video service.

A user application field (User Application 1) of the user application information field (User Application information i₁) includes a user application type field (which is shown as "User Application Type" in FIG. 10) and a user application data field (which is shown as "User Application data" in FIG. 10).

The user application type field (User Application Type) of the user application field (User Application 1) transmits information indicating a decoder that decodes the first stream. That is, since the first stream should be decoded to a video service, information transmitted by the user application type field (User Application Type) of the user application field (User Application 1) may be 0x009, similar to the existing terrestrial DMB system.

Meanwhile, video services may be classified into television (TV) application services and radio application services according to a main object. In this case, information on the classification of the video services is transmitted by a video service object profile identifier field (which is shown as "Video Service Object Profile ID" in FIG. 10) of user application data.

That is, as shown in FIG. 10, the video service object profile identifier field (Video Service Object Profile ID) of the user application field (User Application 1) transmits 0x01 to indicate that the first stream is decoded to a video service of the base layer.

A value (for example, 1) indicating primary is transmitted to the priority flag (P/S) of FIG 0/2 that is associated with SCIdS of the user application information field (User Application information i₁).

Meanwhile, FIG. 11 is a diagram illustrating some FIGs of an enhancement layer transmission frame (which is shown as a "second transmission frame" in FIG. 11 and is hereinafter referred to as a "second transmission frame") including an enhancement layer video service stream (hereinafter, referred to as a "second stream"). In FIG. 11, it is assumed that a user application information field (User Application information i₂) transmits information on the second stream.

The user application information field (User Application information i₂) includes a service identification field (SId), a service component identifier within the service (SCIdS), and a user application field (which is shown as "User Application 2" in FIG. 11). The service identification field (SId) of the user application information field (User Application information i₂) transmits an identifier (which is shown as "SIdx" in FIG. 11). That is, an identifier of the second stream is transmitted as SIdx, which is identical with an identifier of the first stream, such that the receiving apparatus can decode the second stream of the second transmission frame and the first stream of the first transmission frame into one high-quality video service.

In the user application information field (User Application information i₂), a user application type field (User Application Type) of the user application field (User Application 2) transmits 0x009 to indicate that the second stream is decoded to a video service.

A video service object profile identifier field (Video Service Object Profile ID) of the user application field (User Application 2) transmits a value indicating that the second stream is the enhancement layer video service stream that is decoded to a high-quality video service together with the related base layer video service stream.

According to the second exemplary embodiment of the present invention, a value that is configured in the video service object profile identifier field (Video Service Object Profile ID) to indicate the enhancement layer video service stream is additionally defined. For example, as shown in FIG. 11, the video service object profile identifier field (Video Service Object Profile ID) transmits 0x02 to indicate that the second stream is the enhancement layer video service stream.

In the user application information field (User Application information i₂), a value (for example, 0) indicating secondary is transmitted to the priority flag (P/S) of FIG 0/2 that is associated with SCIdS.

As described above, according to the second exemplary embodiment of the present invention, a value that is configured in the video service object profile identifier field (Video Service Object Profile ID) to indicate the enhancement layer video service stream is additionally defined in order to discriminate the enhancement layer video service stream. In this way, it is possible to discriminate the enhancement layer video service stream from the base layer video service stream on the basis of information transmitted through the video service object profile identifier field (Video Service Object Profile ID). Further, it is possible to indicate that the base layer video service stream and the enhancement layer video service stream correspond to the same high-quality video service using the service identifier.

Meanwhile, although not separately shown in the drawings, the enhancement layer video service stream may be defined by a combination of the first exemplary embodiment and the second exemplary embodiment. For example, the first exemplary embodiment may be used to transmit information indicating that the first and second streams are related to the same video service, and the second exemplary embodiment may be used to transmit a method of independently decoding the first stream and the second stream. That is, the same service identifier may be configured in the service identification field of FIG 0/2 that transmits information on the first stream and in the service identification field of FIG 0/2 that transmits information on the second stream to indicate that the first stream and the second stream are related to the same video service. In addition, a value indicating the base layer video service stream may be configured in the video service object profile identifier field (Video Service Object Profile ID) of FIG 0/13 that transmits information on the first stream, and the first stream may be decoded by a base layer video service decoder. In contrast, a value indicating the enhancement layer video service stream may be configured in the video service object profile identifier field (Video Service Object Profile ID) of FIG 0/13 that transmits information on the second stream, and a combination of the second stream and the first stream may be decoded by an enhancement layer video service decoder.

Next, an apparatus and method for receiving broadcasting signals according to an exemplary embodiment of the present invention will be described.

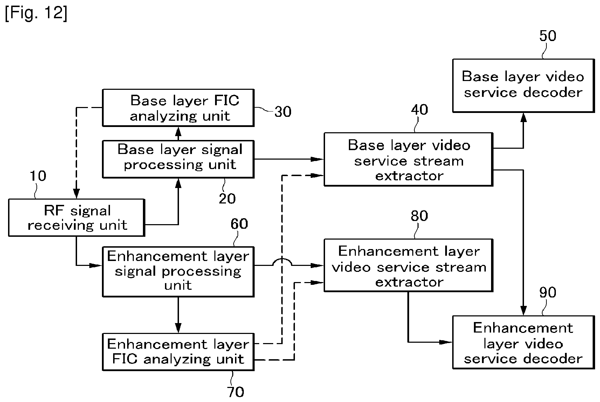

FIG. 12 is a diagram illustrating the configuration of a broadcasting signal receiving apparatus according to an exemplary embodiment of the present invention, and FIG. 13 is a flowchart illustrating a broadcasting signal receiving method according to an exemplary embodiment of the present invention.

As shown in FIG. 12, a terrestrial DMB signal receiving apparatus according to an exemplary embodiment of the present invention includes an RF signal receiving unit 10, a base layer signal processing unit 20, a base layer FIC analyzing unit 30, a base layer video service stream extractor 40, a base layer video service decoder 50, an enhancement layer signal processing unit 60, an enhancement layer FIC analyzing unit 70, an enhancement layer video service stream extractor 80, and an enhancement layer video service decoder 90.

The RF signal receiving unit 10 tunes a frequency (RF) that is requested by the user (S910), and receives a signal corresponding to the RF. The RF signal receiving unit 10 demodulates the received signal to the base layer, and transmits a first demodulated transmission frame to the base layer signal processing unit 20 (S911).

The base layer signal processing unit 20 extracts an FIC from the first transmission frame received from the RF signal receiving unit 10, and transmits the extracted FIC to the base layer FIC analyzing unit 30.

The base layer FIC analyzing unit 30 analyzes the FIC of the first transmission frame received from the base layer signal processing unit 20 (S912). The base layer FIC analyzing unit 30 makes a service list of the base layer on the basis of the multiplexing configuration information (MCI) and service information (SI) included in the FIC of the first transmission frame (S913).

Then, the base layer FIC analyzing unit 30 searches a field indicating a video service stream from the FIC of the first transmission frame, and transmits the searched field to the base layer video service stream extractor 40. That is, according to the first exemplary embodiment, the base layer FIC analyzing unit 30 recognizes, as a field indicating the base layer video service stream, the service field of FIG 0/2 in which a value (for example, 24) indicating a video service is configured in the data service component field (DSCTy) and a value (for example, 1) indicating primary is configured in the priority flag (P/S). According to the second exemplary embodiment, the base layer FIC analyzing unit 30 recognizes, as a field indicating the base layer video service stream, the user application information field of the FIG 0/13 in which a value (0x009) indicating the video service is configured in the user application type field (User Application Type), a value (for example, 0x01) indicating the video service is configured in the video service object profile identifier field (Video Service Object Profile ID), and a value (for example, 1) indicating primary is configured in the priority flag of the FIG 0/2 associated with SCIdS.

The base layer video service stream extractor 40 requests the base layer signal processing unit 20 to transmit the base layer video service stream, on the basis of the field indicating the video service that is received from the base layer FIC analyzing unit 30, and receives the base layer video service stream from the base layer signal processing unit 20.

Meanwhile, the base layer FIC analyzing unit 30 examines whether an FIG (for example, FIG 0/15) including the hierarchical modulation field exists in the FIC of the first transmission frame (S920).

When no FIG including hierarchical modulation field is detected, only the base layer service is provided, similar to the existing terrestrial DMB system. That is, the service list of the base layer made by the base layer FIC analyzing unit 30 is output to the user (S940). A service stream corresponding to the service selected by the user is decoded and a service is provided to the user (S950).

Meanwhile, when the base layer FIC analyzing unit 30 detects the FIC (for example Hierarchical Modulation Information FIG 0/15) including the hierarchical modulation field from the FIC of the first transmission frame, the base layer FIC analyzing unit 30 analyzes the hierarchical modulation field to generate enhancement layer reception information (S921). The base layer FIC analyzing unit 30 transmits the enhancement layer reception information to the RF signal receiving unit 10 (S922).

The RF signal receiving unit 10 receives signals on the basis of the enhancement layer reception information received from the base layer FIC analyzing unit 30, demodulates the received signal into the enhancement layer, and transmits the demodulated second transmission frame to the enhancement layer signal processing unit 60 (S923).

The enhancement layer signal processing unit 60 detects the FIC of the second transmission frame received from the RF signal receiving unit, and transmits the detected FIC of the second transmission frame to the enhancement layer FIC analyzing unit 70.

The enhancement layer FIC analyzing unit 70 analyzes the FIC of the second transmission frame received from the enhancement layer signal processing unit 60 (S924). In this case, the enhancement layer FIC analyzing unit 70 searches a field indicating the enhancement layer video service stream from the FIC of the second transmission frame (S930).

That is, according to the first exemplary embodiment, the enhancement layer FIC analyzing unit 70 recognizes, as a field indicating the enhancement layer video service stream, the service field of FIG 0/2 in which a value (for example, 25) indicating an enhancement layer video service stream is configured in the data service component field (DSCTy) and a value (for example, 0) indicating secondary is configured in the priority flag (P/S).

According to the second exemplary embodiment, the enhancement layer FIC analyzing unit 70 recognizes, as a field indicating the enhancement layer video service stream, the user application information field of the FIG 0/13 in which a value (0x009) indicating the video service is configured in the user application type field (User Application Type), a value (for example, 0x02) indicating the enhancement layer video service stream is configured in the video service object profile identifier field (Video Service Object Profile ID), and a value (for example, 0) indicating secondary is configured in the priority flag of the FIG 0/2 associated with SCIdS.

The enhancement layer FIC analyzing unit 70 transmits, to the enhancement layer video service stream extractor 80, the field that is recognized to indicate the enhancement layer video service stream.

The enhancement layer video service stream extractor 80 requests the enhancement layer signal processing unit 60 to transmit an enhancement layer video service stream, with reference to the field indicating the enhancement layer video service stream that is transmitted from the enhancement layer FIC analyzing unit 70, and receives the enhancement layer video service stream from the enhancement layer signal processing unit 60.

In addition, the enhancement layer video service stream extractor 80 searches a base layer video service stream having the same service identifier (SId) as that of the enhancement layer video service stream from the base layer service list. Then, the enhancement layer video service stream extractor 80 connects the base layer video service stream and the enhancement layer video service stream having the same service identifier (S931).

Meanwhile, the enhancement layer FIC analyzing unit 70 makes an enhancement layer service list on the basis of all the service information (SI) except for the field indicating the enhancement layer video service stream (S932). The reason why a service corresponding to the enhancement layer video service stream is excluded from the enhancement layer service list is to prevent a high-quality video service from being written in both the enhancement layer service list and the base layer service list, since the enhancement layer video service stream and a base layer video service stream related thereto are decoded to one high-quality video service.

Then, the base layer service list and the enhancement layer service list are output to the user (S940), and a service stream corresponding to the service selected by the user is decoded by a corresponding decoder.

When the user selects a high-quality video service (S941), the user is asked whether to view a base video service or a high-quality video service (S942).

If the user selects the base video service, the base layer video service stream extractor 40 uses the base layer service list to extract a base layer video service stream corresponding to the video service selected by the user, and transmits the extracted base layer video service stream to the base layer video service decoder 50. Then, the base layer video service decoder 50 decodes the base layer video service stream (S950).

On the other hand, if the user selects the high-quality video service, the base layer video service stream extractor 40 transmits, to the enhancement layer video service decoder 90, a base layer video service stream having a service identifier of the service selected by the user, and the enhancement layer video service stream extractor 80 transmits, to the enhancement layer video service decoder 90, an enhancement layer video service stream having a service identifier of the video service selected by the user. Then, the enhancement layer video service decoder 90 decodes a combination of the base layer video service stream and the enhancement layer video service stream having the same service identifier (SId) that are respectively received from the base layer video service stream extractor 40 and the enhancement layer video service stream extractor 80 (S950).

As described above, the apparatus and method of receiving broadcasting signals according to the above-described exemplary embodiment of the present invention can use the hierarchical modulation index included in the base layer signal to receive the enhancement layer signal. Further, the apparatus and method of receiving broadcasting signals according to the above-described exemplary embodiment of the present invention can connect the base layer video service stream and the enhancement layer video service stream related to the same service, and decode the connected streams. As a result, it is possible to provide the user with a high-quality video service.

The above-described exemplary embodiments of the present invention can be applied to programs that allow computers to execute functions corresponding to the configurations of the exemplary embodiments of the invention or recording media including the programs as well as the method and apparatus. Those skilled in the art can easily implement the applications from the above-described exemplary embodiments of the present invention.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A method of transmitting a broadcasting signal in a broadcasting signal transmitting apparatus, the method comprising:
generating (S220) a base frame including a base layer stream;
generating (S230) an enhancement frame including an enhancement layer stream;
performing (S240) hierarchical modulation on the base frame and the enhancement frame; and
transmitting (S250) a broadcasting signal including the base frame and enhancement frame which are hierarchically modulated,
wherein the base frame includes hierarchical modulation information used in the hierarchical modulation,
wherein the hierarchical modulation information includes a hierarchical modulation index which is a value used to discriminate the enhancement layer signal from the base layer signal and indicates the positions of the enhancement layer signals in the modulation constellation diagram, and
wherein the base layer stream includes a base layer video stream, and the enhancement layer stream includes an enhancement layer video stream that is paired with the base layer video stream.

2. A method of receiving a broadcasting signal in a broadcasting signal receiving apparatus, the method comprising:
receiving (S911) a base frame among the base frame and an enhancement which are hierarchically modulated;
detecting (S921) a hierarchical modulation index used in hierarchical modulation from a first fast information group of the base frame;
receiving (S923) the enhancement frame using the hierarchical modulation index;
extracting a base layer stream from the base frame;
extracting an enhancement layer stream from the enhancement frame,
wherein the hierarchical modulation information includes a hierarchical modulation index which is a value used to discriminate the enhancement layer signal from the base layer signal and indicates the positions of the enhancement layer signals in the modulation constellation diagram, and
wherein the base layer stream includes a base layer video stream, and the enhancement layer stream includes an enhancement layer video stream that is paired with the base layer video stream.

3. The method of claim 1 or 2, wherein the hierarchical modulation index uses parameters a and b, wherein a is the distance between corresponding enhancement layer signals in quadrants adjacent to each other in the horizontal or vertical direction, and b is the distance between the enhancement layer signals in the same quadrant.

4. The method of claim 1 or 2, wherein the base frame further includes a fast information group having a data field including the hierarchical modulation information.

5. The method of any one of the preceding claims, wherein the base frame further includes a first fast information group for transmitting information on a service and service components,
the enhancement frame further includes a second fast information group for transmitting information on a service and service components,
the first fast information group includes a first priority flag having a value indicating that the base layer video stream is a primary service, and
the second fast information group includes a second priority flag having a value indicating that the enhancement layer video stream is a secondary service.

6. The method of any one of the preceding claims, wherein the base frame further includes a first user application information, the first user application information signaling information for selecting a decoder for decoding the base layer video stream,
the enhancement frame further includes a second user application information, the second user application information signaling information for selecting a decoder for decoding the enhancement layer video stream.

7. The method of any one of the preceding claims, wherein the base frame further includes a first service identifier of the base layer video stream, and
the enhancement frame includes a second service identifier of the enhancement layer video service,
wherein the first service identifier and the second service identifier have the same value indicating the same service.

8. The method of claim 7, wherein each of the base frame and the enhancement frame further includes an identifier for identifying a service component within the same service.

9. An apparatus for transmitting a broadcasting signal, the apparatus comprising:
a service encoder (110) that outputs a base layer stream and a enhancement layer stream;
a first ensemble processing unit (120) that generates a base frame including the base layer stream;
a second ensemble processing unit (130) that generates an enhancement frame including the enhancement layer stream;
a hierarchical modulation unit (140) that performs hierarchical modulation on the base frame and the enhancement frame; and
a transmitter (150) that transmits a broadcast signal including the base frame and the enhancement frame which are hierarchically modulated,
wherein the base frame includes hierarchical modulation information used in the hierarchical modulation,
wherein the hierarchical modulation information includes a hierarchical modulation index which is a value used to discriminate the enhancement layer signal from the base layer signal and indicates the positions of the enhancement layer signals in the modulation constellation diagram, and
wherein the base layer stream includes a base layer video stream, and the enhancement layer stream includes an enhancement layer video stream that is paired with the base layer video stream.

10. An apparatus for receiving a broadcasting signal, the apparatus comprising:
a signal receiving unit (10) that selectively receives a broadcasting signal including a base frame and an enhancement frame which are hierarchically modulated;
a first signal recognizing unit (20) that extracts the base frame from the broadcasting signal;
a first frame analyzing unit (30) that detects hierarchical modulation information from the base frame;
a second signal recognizing unit (60) that uses the hierarchical modulation information to extract the enhancement frame from the broadcasting signal;
a first stream extractor (40) that extracts a base layer stream from the base frame; and
a second stream extractor (80) that extracts an enhancement layer stream from the enhancement frame,
wherein the hierarchical modulation information includes a hierarchical modulation index which is a value used to discriminate the enhancement layer signal from the base layer signal and indicates the positions of the enhancement layer signals in the modulation constellation diagram, and
wherein the base layer stream includes a base layer video stream, and the enhancement layer stream includes an enhancement layer video stream that is paired with the base layer video stream.

11. The apparatus of claim 9 or 10, wherein the hierarchical modulation index uses parameters a and b, wherein a is the distance between corresponding enhancement layer signals in quadrants adjacent to each other in the horizontal or vertical direction, and b is the distance between the enhancement layer signals in the same quadrant.

12. The apparatus of any one of the preceding claims, wherein
the base frame further includes a first fast information group for transmitting information on a service and service components,
the enhancement frame further includes a second fast information group for transmitting information on a service and service components,
the first fast information group includes a first priority flag having a value indicating that the base layer video stream is a primary service, and
the second fast information group includes a second priority flag having a value indicating that the enhancement layer video stream is a secondary service.

13. The apparatus of any one of claims 9 to 12, wherein the base frame further includes a first user application information, the first user application information signaling information for selecting a decoder for decoding the base layer video stream, and
the enhancement frame further includes a second user application information, the second user application information signaling information for selecting a decoder for decoding the enhancement layer video stream.

14. The apparatus of any one of claims 9 to 12, wherein
the base frame further includes a first service identifier of the base layer video stream, and
the enhancement frame further includes a second identifier of the enhancement layer video stream,
wherein the first service identifier and the second service identifier have the same value indicating the same service.

## Patentansprüche

1. Verfahren zum Senden eines Broadcastsignals in einer Broadcastsignal-Sendevorrichtung, das Verfahren aufweisend:
Erzeugen (S220) eines Basisframes einschließlich eines Basisschicht-Datenstroms;
Erzeugen (S230) eines Erweiterungsframes einschließlich eines Erweiterungsschicht-Datenstroms;
Durchführen (S240) von hierarchischer Modulation auf den Basisframes und den Erweiterungsframes;
Senden (S250) eines Broadcastsignals einschließlich des Basisframes und des Erweiterungsframes, die hierarchisch moduliert sind,
wobei der Basisframe hierarchische Modulationsinformation umfasst, die in der hierarchischen Modulation verwendet wird,
wobei die hierarchische Modulationsinformation einen hierarchischen Modulationsindex umfasst, bei dem es sich um einen Wert handelt zum Unterscheiden des Erweiterungsschichtsignals von dem Basisschichtsignal und zum Anzeigen der Positionen der Erweiterungsschichtsignale in dem Modulationskonstellationsdiagramm,
wobei der Basisschicht-Datenstrom einen Basisschicht-Videodatenstrom umfasst, und der Erweiterungsschicht-Datenstrom einen Erweiterungsschicht-Videodatenstrom umfasst, der mit dem Basisschicht-Videodatenstrom gepaart ist.

2. Verfahren zum Empfangen eines Broadcastsignals in einer Broadcastsignal-Empfangsvorrichtung, das Verfahren aufweisend:
Empfangen (S911) eines Basisframes unter dem Basisframe und einer Erweiterung, die hierarchisch moduliert sind;
Erfassen (S921) eines hierarchischen Modulationsindexes, der bei der hierarchischen Modulation verwendet wird, aus einer ersten Schnellinformationsgruppe des Basisframes;
Empfangen (S923) des Erweiterungsframes unter Verwendung des hierarchischen Modulationsindexes;
Extrahieren eines Basisschicht-Datenstroms aus dem Basisframe;
Extrahieren eines Erweiterungsschicht-Datenstroms aus dem Erweiterungsframe,
wobei die hierarchische Modulationsinformation einen hierarchischen Modulationsindex umfasst, bei dem es sich um einen Wert handelt zum Unterscheiden des Erweiterungsschichtsignals von dem Basisschichtsignal und zum Angeben der Positionen der Erweiterungsschichtsignale in dem Modulationskonstellationsdiagramm, und
wobei der Basisschicht-Datenstrom einen Basisschicht-Videodatenstrom und der Erweiterungsschicht-Datenstrom einen Erweiterungsschicht-Videodatenstrom umfasst, der mit dem Basisschicht-Videodatenstrom gepaart ist.

3. Verfahren nach Anspruch 1 oder 2, wobei der hierarchische Modulationsindex Parameter a und b verwendet, wobei a die Distanz zwischen entsprechenden Erweiterungsschichtsignalen in zueinander benachbarten Quadranten in der horizontalen oder vertikalen Richtung ist, und wobei b die Distanz zwischen den Erweiterungsschichtsignalen in demselben Quadranten ist.

4. Verfahren nach Anspruch 1 oder 2, wobei der Basisframe weiterhin eine Schnellinformationsgruppe mit einem Datenfeld einschließlich der hierarchischen Modulationsinformation umfasst.

5. Verfahren nach einem der vorangehenden Ansprüche, wobei der Basisframe weiterhin eine erste Schnellinformationsgruppe zum Senden von Informationen über einen Dienst und Dienstkomponenten umfasst,
der Erweiterungsframe weiterhin eine zweite Schnellinformationsgruppe zum Senden von Informationen über einen Dienst und Dienstkomponenten umfasst,
die erste Schnellinformationsgruppe ein erstes Prioritätskennzeichen mit einem Wert umfasst, der angibt, dass der Basisschicht-Videodatenstrom ein primärer Dienst ist, und
die zweite Schnellinformationsgruppe ein zweites Prioritätskennzeichen mit einem Wert umfasst, der angibt, dass der Erweiterungsschicht-Videodatenstrom ein sekundärer Dienst ist.

6. Verfahren nach einem der vorangehenden Ansprüche, wobei der Basisframe weiterhin eine erste Anwender-Anwendungsinformation umfasst, wobei die erste Anwender-Anwendungsinformation Informationen zur Auswahl eines Decoders zum Decodieren des Basisschicht-Videodatenstroms signalisiert,
der Erweiterungsframe weiterhin eine zweite Anwender-Anwendungsinformation umfasst, wobei die zweite Anwender-Anwendungsinformation Informationen zur Auswahl eines Decoders zum Decodieren des Erweiterungsschicht-Videodatenstroms signalisiert.

7. Verfahren nach einem der vorangehenden Ansprüche, wobei der Basisframe weiterhin einen ersten Dienstidentifizierer des Basisschicht-Videodatenstroms umfasst, und
der Erweiterungsframe einen zweiten Dienstidentifizierer des Erweiterungsschicht-Videodienstes umfasst,
wobei der erste Dienstidentifizierer und der zweite Dienstidentifizierer denselben Wert haben, der denselben Dienst angibt.

8. Verfahren nach Anspruch 7, wobei der Basisframe und der Erweiterungsframe weiterhin einen Identifizierer zum Identifizieren einer Dienstkomponente innerhalb desselben Dienstes umfassen.

9. Vorrichtung zum Senden eines Broadcastsignals, die Vorrichtung aufweisend:
einen Dienstcodierer (110), der einen Basisschicht-Datenstrom und einen Erweiterungsschicht-Datenstrom ausgibt;
eine erste Ensemble-Verarbeitungseinheit (120), die einen Basisframe einschließlich des Basisschicht-Datenstroms erzeugt;
eine zweite Ensemble-Verarbeitungseinheit (130), die einen Erweiterungsframe einschließlich des Erweiterungsschicht-Datenstroms erzeugt;
eine hierarchische Modulationseinheit (140), die hierarchische Modulation auf dem Basisframe und den Erweiterungsframes durchführt;
einen Sender (150), der ein Broadcastsignal sendet, einschließlich des Basisframes und des Erweiterungsframes, die hierarchisch moduliert sind,
wobei der Basisframe hierarchische Modulationsinformation umfasst, die bei der hierarchischen Modulation verwendet wird,
wobei die hierarchische Modulationsinformation einen hierarchischen Modulationsindex umfasst, bei dem es sich um einen Wert handelt zum Unterscheiden der Erweiterungsschichtsignale von den Basisschichtsignalen und zum Angeben der Position der Erweiterungsschichtsignale in dem Modulationskonstellationsdiagramm, und
wobei der Basisschicht-Datenstrom einen Basisschicht-Videostrom und der Erweiterungsschicht-Datenstrom einen Erweiterungsschicht-Videodatenstrom umfasst, der mit dem Basisschicht-Videodatenstrom gepaart ist.

10. Vorrichtung zum Empfangen eines Broadcastsignals, die Vorrichtung aufweisend:
eine Signalempfangseinheit (10), die selektiv ein Broadcastsignal empfängt, einschließlich eines Basisframes und eines Erweiterungsframes, die hierarchisch moduliert sind;
eine erste Signalerkennungseinheit (20), die den Basisframe aus dem Broadcastsignal extrahiert;
eine erste Frameanalyseeinheit (30), welche die hierarchische Modulationsinformation aus dem Basisframe detektiert;
eine zweite Signalerkennungseinheit (60), die die hierarchische Modulationsinformation zum Extrahieren des Erweiterungsframes aus dem Broadcastsignal verwendet;
einen ersten Datenstromextrahierer (40), der einen Basisschicht-Datenstrom aus dem Basisframe extrahiert; und
einen zweiter Datenstromextrahierer (80), der einen Erweiterungsschicht-Datenstrom aus dem Erweiterungsframe extrahiert,
wobei die hierarchische Modulationsinformation einen hierarchischen Modulationsindex umfasst, bei dem es sich um einen Wert handelt zum Unterscheiden des Erweiterungsschichtsignals von dem Basisschichtsignal und zum Angeben der Positionen der Erweiterungsschichtsignale in dem Modulationskonstellationsdiagramm, und
wobei die Basisschicht einen Basisschicht-Videodatenstrom und die Erweiterungsschicht einen Erweiterungsschicht-Videodatenstrom umfasst, der mit dem Basisschicht-Videodatenstrom gepaart ist.

11. Vorrichtung nach Anspruch 9 oder 10 wobei der hierarchische Modulationsindex Parameter a und b verwendet, wobei a die Distanz zwischen entsprechenden Erweiterungsschichtsignalen in zueinander benachbarten Quadranten in der horizontalen oder vertikalen Richtung ist, und wobei b die Distanz zwischen den Erweiterungsschichtsignalen in demselben Quadranten ist.

12. Vorrichtung nach einem der vorangehenden Ansprüche, wobei
der Basisframe weiterhin eine erste Schnellinformationsgruppe zum Senden von Informationen zu einem Dienst und Dienstkomponenten umfasst,
der Erweiterungsframe weiterhin eine zweite Schnellinformationsgruppe zum Senden von Informationen über einen Dienst und Dienstkomponenten umfasst,
die erste Schnellinformationsgruppe ein erstes Prioritätskennzeichen mit einem Wert umfasst, der angibt, dass der Basisschicht-Videodatenstrom ein primärer Dienst ist, und
die zweite schnelle Informationsgruppe ein zweites Prioritätskennzeichen mit einem Wert umfasst, der angibt, dass der Erweiterungsschicht-Videodatenstrom ein sekundärer Dienst ist.

13. Vorrichtung nach einem der Ansprüche 9 bis 12, wobei der Basisframe weiterhin eine erste Anwender-Anwendungsinformation umfasst, wobei die erste Anwender-Anwendungsinformation Informationen zur Auswahl eines Decoders zum Decodieren des Basisschicht-Videodatenstroms signalisiert,
der Erweiterungsframe weiterhin eine zweite Anwender-Anwendungsinformation umfasst, wobei die zweite Anwender-Anwendungsinformation Informationen zur Auswahl eines Decoders zum Decodieren des Erweiterungsschicht-Videodatenstroms signalisiert.

14. Vorrichtung nach einem der Ansprüche 9 bis 12, wobei
der Basisframe weiterhin einen ersten Dienstidentifizierer des Basisschicht-Videodatenstroms umfasst, und
die Erweiterungsschicht weiterhin einen zweiten Dienstidentifizierer des Erweiterungsschicht-Videodienstes umfasst,
wobei der erste Dienstidentifizierer und der zweite Dienstidentifizierer denselben Wert haben, der denselben Dienst angibt.

## Revendications

1. Un procédé de transmission d'un signal de radiodiffusion dans un appareil de transmission de signal de radiodiffusion, le procédé comprenant :
le fait (S220) de générer une trame de base incluant un flux de couche de base ;
le fait (S230) de générer une trame d'amélioration incluant un flux de couche d'amélioration ;
le fait (S240) d'exécuter une modulation hiérarchique sur la trame de base et la trame d'amélioration ; et
le fait (S250) de transmettre un signal de radiodiffusion comprenant la trame de base et la trame d'amélioration qui sont modulées hiérarchiquement,
la trame de base comprenant une information de modulation hiérarchique utilisée dans la modulation hiérarchique,
l'information de modulation hiérarchique comprend un indice de modulation hiérarchique qui est une valeur utilisée pour discriminer le signal de la couche d'amélioration du signal de couche de base et qui indique les positions des signaux de la couche d'amélioration dans le diagramme de constellation de modulation, et
le flux de couche de base comprenant un flux vidéo de la couche de base, et le flux de couche d'amélioration comprenant un flux vidéo de la couche d'amélioration qui est apparié au flux vidéo de la couche de base.

2. Un procédé de réception d'un signal de radiodiffusion dans un appareil de réception de signal de radiodiffusion, le procédé comprenant :
le fait (S911) de recevoir une trame de base parmi la trame de base et une trame d'amélioration qui sont modulées hiérarchiquement ;
le fait (S921) de détecter un indice de modulation hiérarchique utilisé dans la modulation hiérarchique à partir d'un premier groupe d'informations rapides de la trame de base ;
le fait (S923) de recevoir la trame d'amélioration en utilisant l'indice de modulation hiérarchique
le fait d'extraire de la trame de base un flux de couche de base ;
le fait d'extraire de la trame d'amélioration un flux de couche d'amélioration,
l'information de modulation hiérarchique comprenant un indice de modulation hiérarchique qui est une valeur utilisée pour discriminer le signal de la couche d'amélioration du signal de la couche de base et qui indique les positions des signaux de la couche d'amélioration dans le diagramme de constellation de modulation, et
le flux de couche de base comprenant un flux vidéo de la couche de base, et le flux de la couche d'amélioration inclut un flux vidéo de la couche d'amélioration qui est apparié au flux vidéo de couche de base.

3. Le procédé selon la revendication 1 ou la revendication 2, dans lequel l'indice de modulation hiérarchique utilise des paramètres a et b, parmi lesquels a est la distance entre des signaux de couche d'amélioration correspondants dans des quadrants adjacents l'un à l'autre dans la direction horizontale ou verticale, et b est la distance entre les signaux de couche d'amélioration dans le même quadrant.

4. Le procédé selon la revendication 1 ou la revendication 2, dans lequel la trame de base comprend en outre un groupe d'informations rapides ayant un champ de données incluant les informations de modulation hiérarchique.

5. Le procédé selon l'une quelconque des revendications précédentes, dans lequel la trame de base comprend en outre un premier groupe d'informations rapides pour transmettre des informations sur un service et des composants de service,
la trame d'amélioration comprend en outre un deuxième groupe d'informations rapides pour transmettre des informations sur un service et des composants de service,
le premier groupe d'informations rapides comprend un premier drapeau de priorité ayant une valeur indiquant que le flux vidéo de couche de base est un service principal, et
le deuxième groupe d'informations rapides inclut un deuxième drapeau de priorité ayant une valeur indiquant que le flux vidéo de couche d'amélioration est un service secondaire.

6. Le procédé selon l'une quelconque des revendications précédentes, dans lequel la trame de base comprend en outre une première information d'application utilisateur, la première information d'application utilisateur signalant une information pour sélectionner un décodeur afin de décoder le flux vidéo de la couche de base,
la trame d'amélioration comprend en outre une deuxième information d'application utilisateur, la deuxième information d'application utilisateur signalant une information pour sélectionner un décodeur afin de décoder le flux vidéo de la couche d'amélioration.

7. Le procédé selon l'une quelconque des revendications précédentes, dans lequel la trame de base comprend en outre un premier identificateur de service du flux vidéo de couche de base, et la trame d'amélioration comprend un deuxième identificateur de service du service vidéo de couche d'amélioration, le premier identificateur de service et le deuxième identificateur de service ayant la même valeur indiquant le même service.

8. Le procédé selon la revendication 7, dans lequel chacun de la trame de base et du cadre d'amélioration comprend en outre un identificateur pour identifier un composant de service dans le même service.

9. Un appareil pour transmettre un signal de radiodiffusion, l'appareil comprenant :
un codeur de service (110) qui fournit en sortie un flux de couche de base et un flux de couche d'amélioration ;
une première unité de traitement d'ensemble (120) qui génère une trame de base incluant le flux de couche de base ;
une deuxième unité de traitement d'ensemble (130) qui génère une trame d'amélioration incluant le flux de la couche d'amélioration ;
une unité de modulation hiérarchique (140) qui effectue une modulation hiérarchique sur la trame de base et la trame d'amélioration ; et
un émetteur (150) qui transmet un signal de diffusion comprenant la trame de base et la trame d'amélioration qui sont modulées hiérarchiquement,
la trame de base comprenant une information de modulation hiérarchique utilisée dans la modulation hiérarchique,
l'information de modulation hiérarchique comprenant un indice de modulation hiérarchique qui est une valeur utilisée pour discriminer le signal de la couche d'amélioration du signal de couche de base et qui indique les positions des signaux de couche d'amélioration dans le diagramme de constellation de modulation et
le flux de couche de base incluant un flux vidéo de la couche de base et le flux vidéo de couche d'amélioration comprenant un flux vidéo de la couche d'amélioration qui est apparié au flux vidéo de couche de base.

10. Un appareil pour recevoir un signal de radiodiffusion, l'appareil comprenant :
une unité (10) de réception de signal qui reçoit sélectivement un signal de radiodiffusion comprenant une trame de base et une trame d'amélioration qui sont modulées hiérarchiquement ;
une première unité (20) de reconnaissance de signal qui extrait la trame de base du signal de radiodiffusion ;
une première unité (30) d'analyse de trame qui détecte les informations de modulation hiérarchique depuis la trame de base ;
une deuxième unité (60) de reconnaissance de signal qui utilise l'information de modulation hiérarchique pour extraire la trame d'amélioration du signal de radiodiffusion ;
un premier extracteur de flux (40) qui extrait un flux de couche de base de la trame de base ; et
un deuxième extracteur de flux (80) qui extrait un flux de couche d'amélioration de la trame d'amélioration,
l'information de modulation hiérarchique comprenant un indice de modulation hiérarchique qui est une valeur utilisée pour discriminer le signal de la couche d'amélioration du signal de la couche de base et indique les positions des signaux de la couche d'amélioration dans le diagramme de constellation de modulation, et
le flux de couche de base comprenant un flux vidéo de la couche de base, et le flux de couche d'amélioration comprenant un flux vidéo de la couche d'amélioration qui est apparié au flux vidéo de la couche de base.

11. L'appareil selon la revendication 9 ou la revendication 10, dans lequel l'indice de modulation hiérarchique utilise les paramètres a et b, a étant la distance entre des signaux de couche d'amélioration correspondants dans des quadrants adjacents l'un à l'autre dans la direction horizontale ou verticale, et b étant la distance entre les signaux de couche d'amélioration dans le même quadrant.

12. L'appareil selon l'une quelconque des revendications précédentes, dans lequel
la trame de base comprend en outre un premier groupe d'informations rapides pour transmettre des informations sur un service et des composants de service,
la trame d'amélioration comprend en outre un deuxième groupe d'informations rapides pour transmettre des informations sur un service et des composants de service,
le premier groupe d'informations rapides comprend un premier drapeau prioritaire ayant une valeur indiquant que le flux vidéo de couche de base est un service principal, et
le deuxième groupe d'informations rapides inclut un deuxième drapeau prioritaire ayant une valeur indiquant que le flux vidéo de couche d'amélioration est un service secondaire.

13. L'appareil selon l'une quelconque des revendications 9 à 12, dans lequel la trame de base comprend en outre une première information d'application utilisateur, la première information d'application utilisateur signalant une information pour sélectionner un décodeur afin de décoder le flux vidéo de couche de base, et
la trame d'amélioration comprend en outre une deuxième information d'application utilisateur, la deuxième information d'application utilisateur signalant une information pour sélectionner un décodeur afin de décoder le flux vidéo de couche d'amélioration.

14. L'appareil selon l'une quelconque des revendications 9 à 12, dans lequel
la trame de base comprend en outre un premier identificateur de service du flux vidéo de la couche de base, et
la trame d'amélioration comprend en outre un deuxième identificateur du flux vidéo de la couche d'amélioration,
le premier identificateur de service et le deuxième identificateur de service ayant la même valeur indiquant le même service.
